# EUROPEAN PATENT SPECIFICATION

(11) **EP 2 617 259 B1**
(45) Date of publication and mention of the grant of the patent: **13.05.2015**
(21) Application number: 10859165.2
(22) Date of filing: 05.11.2010
(51) Int. Cl.: H04W 76/02, H04W 8/08, H04W 88/18

(54) **A METHOD FOR PROVIDING A LOCAL TRAFFIC SHORTCUT IN A PACKET-ORIENTED MOBILE COMMUNICATION NETWORK**
VERFAHREN ZUR BEREITSTELLUNG EINER LOKALEN VERKEHRSABKÜRZUNG IN EINEM PAKETORIENTIERTEN MOBILEN KOMMUNIKATIONSNETZ
PROCÉDÉ DE FOURNITURE D'UN RACCOURCI DE TRAFIC LOCAL DANS UN RÉSEAU DE COMMUNICATION MOBILE ORIENTÉ PAQUET

(43) Date of publication of application: 24.07.2013
(73) Proprietor: Huawei Technologies Co., Ltd., Longgang District Shenzhen, Guangdong 518129 (CN)
(72) Inventor: ZHOU, Qing, 10587 Berlin (DE); SCHRAMM, Frank, 13187 Berlin (DE); SCHRAMM, Mirko, 14195 Berlin (DE); PENTIKOUSIS, Konstantinos, 10585 Berlin (DE)
(74) Representative: Thun, Clemens
(86) International application number: PCT/CN2010/078444
(87) International publication number: WO 2012/058817

(56) References cited:
- EP-A2- 0 939 576
- WO-A2-02/15549
- CN-A- 101 541 096
- JP-A- 2004 229 098
- US-A- 6 128 296
- US-A1- 2004 228 343
- US-A1- 2010 202 455
- "3rd Generation Partnership Project; Technical Specification Group Services and System Aspects; Local IP Access and Selected IP Traffic Offload; (Release 10)", 3GPP STANDARD; 3GPP TR 23.829, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.2.1, 30 October 2009 (2009-10-30), pages 1-19, XP050400406, [retrieved on 2009-10-30]
- HUAWEI: "Service Continuity and Routing Optimization", 3GPP DRAFT; S2-070093, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Florence; 20070109, 9 January 2007 (2007-01-09), XP050258906, [retrieved on 2007-01-09]
- 3GPP: "3GPP TR 23.830, V9.0.0 (2009-09), 3rd Generation Partnership Project; Technical Specification Group Services and System Aspects; Architecture aspects of Home NodeB and Home eNodeB (Release 9)", 3GPP TR 23.830 V9.0.0, , vol. 23.830, no. V9.0.0 1 September 2009 (2009-09-01), pages 1-56, XP002612602, Retrieved from the Internet: URL:http://www.3gpp.org/ftp/Specs/archive/ 23_series/23.830/ [retrieved on 2010-12-01]

## Description

### TECHNICAL BACKGROUND

The invention relates to a method for providing a local traffic shortcut in a packet-oriented mobile communication network and in particular in a 3GPP network.

Mobile communication networks are applying a specific mechanism to provide mobility for end devices such as user equipment (UE). This mechanism ensures that IP packets can be transferred between the respective end device and an edge gateway in the mobile communication network where an IP address of the end device is maintained. Accordingly, a mobility mechanism is tunnelling the IP packets through the infrastructure of the mobile communication network along a path consisting of a radio access node and one or more gateways.

It is a characteristics of mobile communication networks that a certain amount of data traffic is exchanged between end devices that are locally close to each other, for example persons in the same street, town or city area. In contrast, the location of the edge gateway of the mobile communication network is, however, typically in a certain distance from the radio access node. Depending on the expected overall amount of data traffic an edge gateway can be responsible for a large area (like a whole city) but also for a whole country. Consequently, in conventional mobile communication networks data traffic exchanged between two end devices may run through a very large area (such as a whole country) even if the two end devices are connected to the very same radio access node.

Consequently, data traffic is unnecessarily transferred throughout the conventional mobile communication network thus wasting resources, processing capacity and energy. Accordingly, it is a goal of the present invention to provide a method which uses efficiently a transport capacity provided by a mobile communication network.

The document US 2004/228343 A1 shows a communication network comprising a number of UEs and a number of routers. Moreover, it comprises a route server resource, which is configured to provide routers with routing information enabling the routers to establish short communication paths, which directly connect to the routers.

The document US 2010/0202455 A1 shows a communication network comprising UEs and routers. The routers can perform shortcut connections to reduce a network lag.

The document "3^{rd} Generation Partnership Project; Technical Specification Group Services and System Aspects; Local IP Access and Selected IP Traffic Offload; (Release 10)" is a specification of a part of the 3G communication standard.

The document "Service Continuity and Routing Optimization" shows a part of the 3G communication standard specification.

### SUMMARY OF THE INVENTION

According to a first aspect of the present invention a method for providing a local traffic shortcut (LTS) in a packet oriented mobile communication network is provided, wherein the method comprises the steps of:
(a) storing in a local traffic shortcut control point (LTSCP) IP addresses of devices served by at least one network node of said network along with a node-ID of the respective network node;
(b) receiving an IP data packet by a network node from a served device and extracting a destination IP-address from the received data packet;
(c) querying the local traffic shortcut control point (LTSCP) by said network node with the extracted destination IP-address of the received data packet to identify at least one network node for performing an LTS;
(d) establishing an LTS path with the identified network node; and
(e) routing IP data packets having said destination IP address through the established LTS path.

A LTS permission indicating whether an establishment of a LTS path is admissible for the respective served device is provided to the network node when the served device connects to the network node and stored in the network node, wherein the network node interacts with the LTSCP only if the LTS permission is provided.

According to a possible implementation of the first aspect of the present invention the served device is formed by a UE.

According to a possible implementation of the first aspect of the present invention the destination IP-address of an IP-data flow is extracted from a header of a first IP-data packet of said IP data flow to query the LTSCP for the existence and identity of a network node to establish an LTS path.

In a possible implementation of the first aspect of the present invention the querying network node receives the identity of the network node for performing LTS only if this complies with configuration data of said LTSCP.

In a possible implementation of the first aspect of the present invention the packet oriented mobile communication network is formed by a hierarchical network having different hierarchy levels.

In a possible implementation the LTS path is established between network nodes of the same hierarchy level.

According to a possible implementation of the first aspect of the present invention if a direct connection between a network node and another network node is available, the LTS path is established at the lowest possible hierarchy level of the network.

In a possible implementation of the first aspect of the present invention a LTS-database is provided at the LTSCP which receives the extracted destination IP-address of the received IP data packet from the network node for performing the query in the LTS-database.

In a possible implementation of the first aspect of the present invention the network node serving the user equipment devices is formed by a traffic shortcut point (TSP).

In a possible implementation of the first aspect of the present invention the traffic shortcut point is formed by a base station.

In a further possible implementation of the method according to the present invention the traffic shortcut point is formed by a serving gateway.

In a still further possible implementation of the first aspect of the present invention the traffic shortcut point is formed by an enhanced packet data gateway (ePDG) of the network.

In a still further possible implementation of the first aspect of the present invention the served UE is formed by a mobile device which is connected with a base station via a wireless link.

In a possible implementation of the first aspect of the present invention the established LTS path is stored in a local memory of the serving network node having received the IP data packet from the served device and removed if no IP data packets are transferred along the LTS path for a configurable duration.

In a possible implementation of the first aspect of the present invention the established LTS path stored in the local memory of the serving network node is updated when a handover of the served device to another base station is performed.

According to a second aspect of the present invention a packet-oriented network communication network is provided comprising:

a LTSCP performing a query in a LTS-database on the basis of an extracted destination IP-address of a data packet received by a first network node from a served device to identify at least one second network node for establishment of an LTS path between the first network node and the identified second network node.

wherein the LTS-database of the LTSCP stores the IP-addresses of UEs served by at least one network node of said network along with a node-ID of the respective serving network node.

According to a possible implementation of the packet-oriented network communication network according to the second aspect of the present invention the serving network node is formed by a TSP. This traffic shortcut point can be formed in a possible implementation by a base station. The network further comprises means adapted to route IP data packets having said ID-address through the established data path and means adapted to provide and store in the network node a LTS permission indicating whether an establishment of a LTS path is admissible for the respective served device to the network node when the served device connects to the network node. The network node is adapted to interact with the LTSCP only if the LTS permission is provided.

Furthermore, the TSP can be formed by a serving gateway SGW of the network.

In a still further possible implementation the traffic shortcut point can be formed by an ePDG of the network.

In a possible implementation of the packet-oriented network communication network according to the second aspect of the present invention the served device is a UE which can be formed by a mobile device connected to a base station via a wireless link.

According to a possible implementation of the packet-oriented network communication network according to the second aspect of the present invention the packet-oriented mobile communication network can be formed by a hierarchical network having different hierarchy levels wherein the LTS path may be established in a possible embodiment between network nodes of the same hierarchy level.

In a possible implementation of the packet-oriented network communication network according to the second aspect of the present invention the packet-oriented mobile communication network can comprise a 3GPP network or a WIMAX network.

### BRIEF DESCRIPTION OF THE FIGURES

Fig. 1 shows a flow chart of a possible implementation of a method for providing an LTS in a packet-oriented mobile communication network according to a first aspect of the present invention;
Fig. 2 shows a block diagram of a reference architecture of a packet-oriented mobile communication network according to a second aspect of the present invention wherein a method for providing an LTS can be employed;
Fig. 3 shows an exemplary signal diagram for an example procedure as an exemplary implementation of a method for providing an LTS according to the first aspect of the present invention;
Fig. 4 shows a diagram for illustrating an IP packet forwarding between traffic shortcut points located in the same network element;
Fig. 5 shows a diagram for illustrating forwarding of an IP packet when traffic shortcut points are located in different network elements; and
Fig. 6 show diagrams for illustrating handover procedures performed by possible implementations of a method according to a further aspect of the present invention.

### DETAILED DESCRIPTION OF EMBODIMENTS

In the following possible implementations of different aspects of the present invention are described with reference to the enclosed figures.

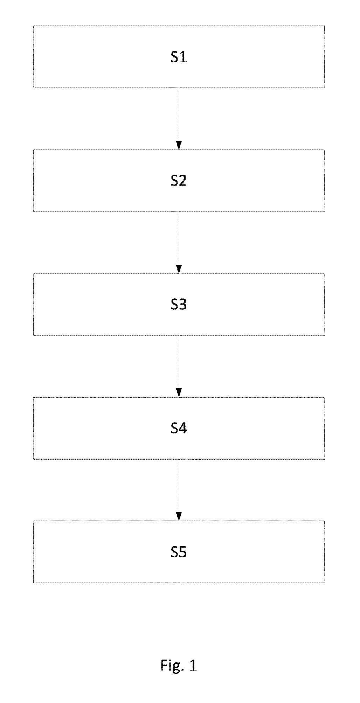

As can be seen in Fig. 1 showing a possible exemplary implementation of a method for providing an LTS in a packet-oriented mobile communication network the method can comprise several steps S1 - S4.

In a first step S1 IP-addresses of devices such as UEs served by at least one network node of the network are stored in a local traffic shortcut control point (LTSCP) having a LTS-database along with a node-ID of the respective network node. The node-ID can be formed by an IP-address of the respective network node. The served device can be formed by a network element in particular a user equipment device. Further, it is possible that the served device comprises another network node element of the network such as a server.

In a further step S2 an IP data packet is received by a network node from a served UE and a destination IP-address is extracted from the received data packet.

In a further step S3 the LTS-CP is queried by the network node with the extracted destination IP-address of the received data packet to identify the existence and identity of a network node for performing an LTS.

In a step S4 an LTS path is established with the identified network node. The identified network node can be the querying network itself or another network node of the packet-oriented mobile communication network.

In step S5 IP data packets having the extracted destination IP address are routed through the established LTS path.

The mechanism provided by a method for providing a local traffic shortcut LTS in a packet-oriented mobile communication network according to a first aspect of the present invention is primarily based on an IP-address of an end device such as a terminal or a UE in a local area wherein the IP-address is stored together with addresses of network entities or network nodes serving the respective end device or UE. Upon receiving an IP data packet it is checked by the respective receiving network node whether the data traffic received is a local data traffic or a non-local data traffic. This can be done based on a destination IP-address of the IP data packet and the IP-address is stored in step S 1. If the received data traffic is a local data traffic in a possible implementation a LTS data path for the special data traffic is setup in step S4. For the local traffic the IP data packet is then routed via the established LTS data path.

In a possible implementation in step S1 it is further checked whether the establishment of a local traffic shortcut LTS is allowed or not. This check can be performed in a possible embodiment based on an LTS policy received in advance. If the establishment of a LTS path is allowed the IP-address of the end device or UE is stored in step S1. The IP-address of the UE can be stored together with identity information of the entity or network node serving the respective UE or end device. This allows that the data traffic of other end devices or UE can be checked against the stored information data. In contrast, if establishment of a local traffic shortcut LTS is not allowed the IP-address of the end device UE is not stored in a possible implementation. In a still further implementation of the first aspect of the present invention the storage of IP-address of the network entities serving the UE are updated when the user equipment device UE or mobile terminal moves. In a possible implementation it is checked whether LTS is allowed or not for the bearer tunnel where the IP packet is received based on a LTS policy received in advance. In a further possible implementation for data traffic with the same destination IP-address checking of local traffic can be performed only on the basis of the first IP packet of the respective packet flow. In this possible implementation for the subsequent IP data packets of the packet flow the established LTS path can be used. In a still further implementation the established LTS path is kept or maintained for a configurable period of time. If the configurable duration expires and no IP packet has been received within the configurable time duration the IP path can be cancelled in a possible embodiment.

As described the method according to the exemplary implementation shown in Fig. 1 can be employed in a packet-oriented mobile communication network, and in particular in a 3GPP network or a WIMAX network. This packet-oriented communication network can comprise at least one LTS-database for storing the IP-addresses of UE served by at least one network node of the network along with a node-ID of the respective serving network node. Further, the packet-oriented communication network can comprise in a possible implementation a local traffic shortcut control point LTS CP performing a query in the LTS-database on the basis of an extracted destination IP-address of a data packet (DP) received by a first network node from a UE to identify at least one second network node for establishment of an LTS path between the first network node and the identified second network node. The first and second network node can be different network nodes of the network but can also be formed by the same querying network node.

In the packet-oriented network communication network according to the second aspect of the present invention the serving network node can be formed by an TSP comprising a base station, a serving gateway or e.g. an enhanced packet data gateway of the network. The packet-oriented mobile communication network according to the second aspect of the present invention can be formed by a hierarchical network having different hierarchy levels wherein the LTS path is established in a possible embodiment between network nodes of the same hierarchy level. In a possible implementation if a direct connection between a network node and another network node is available the LTS path can be established in a possible embodiment at the lowest possible hierarchy level of the network.

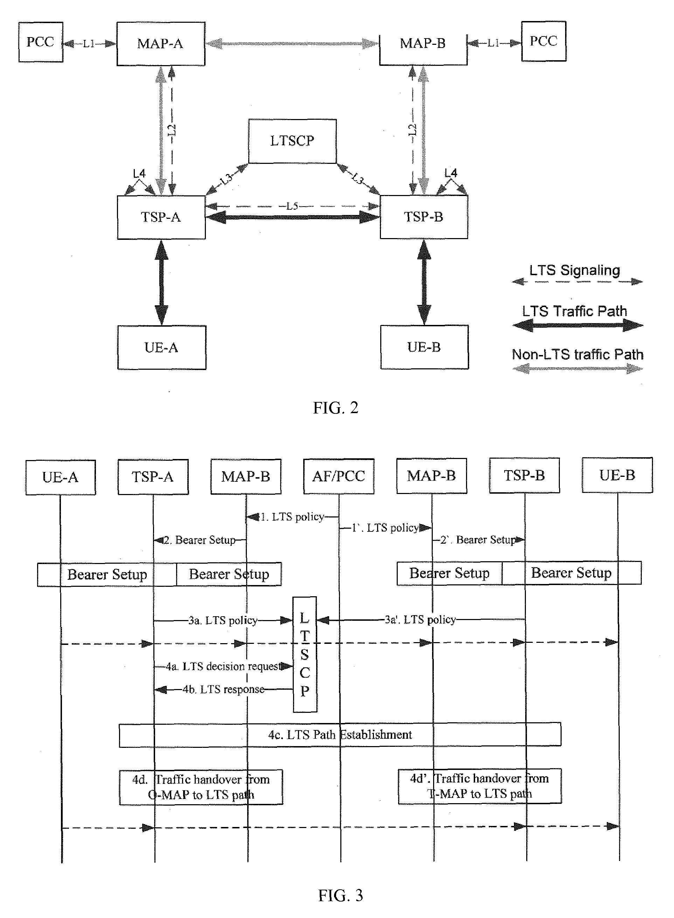

Further exemplary embodiments and implementations are described in the following with reference to a basic reference architecture of a packet-oriented network communication network which can employ a method providing an LTS according to the first aspect of the present invention. The network can comprise different functional elements located in the same or different network nodes, in particular the equipment devices, UE or mobile terminals connected via wireless links to the TSPs which can be formed by radio access networks, in particular base stations BS. Further, the communication network can comprise mobile anchor points (MAPs) and at least one LTSCP gathering data and information for LTS decision and establishing of LTS paths. In a possible implementation the packet-oriented communication network according to the second aspect of the present invention comprises according to the reference architecture shown in Figure 2 the following elements:
UE: There are two UEs in the reference architecture, UE-A and UE-B. LTS does not have an impact to UE: its functionality remains as defined in EPS.
MAP: Mobile Anchor Point, e.g. PGW, which serves the corresponding UE. It is included in a non-LTS path, but not included in the LTS path. It could be separated to the Originating MAP (O-MAP), which serves the UE sending the IP packet, and the Target MAP (T-MAP), which serves the UE receiving the IP packet.
**TSP:** Traffic Shortcut Point, i.e. the user plane node which can shortcut the data traffic. It can include O-TSP and T-TSP functions. There can be several TSPs in the user plane for each of the UEs.
**O-TSP:** Originating Traffic Shortcut Point, i.e. the user plane node which routes the IP packet from UE-A to the LTS path and bypasses the MAPs. Examples of O-TSP are eNodeB, SGW, ePDG which serve the UE sending the IP packet;
**T-TSP:** Terminating Traffic Shortcut Point, i.e. the user plane node which receives the IP packet from the LTS path and forwards it to the UE-B. Example of a T-TSP are eNodeB, SGW, ePDG which serve the UE receiving the IP packet;
**LTSCP:** the Local Traffic Shortcut Control Point gathers the information for LTS decision making. LTSCP is involved to the LTS decision making together with TSPs. The LTSCP can serve a certain LTS area (e.g. one country) inside an operator, to ensure that the same LTSCP is selected for all the terminals or UEs in the LTS area. Furthermore, the LTS areas served by different LTSCPs can be overlapped in the edge of the LTS area. If a UE is located in the overlapping area of the multiple LTS areas, all LTSCPs serving the overlapping areas are informed. The LTSCP can be an MME in a 3GPP network, which serves the 3GPP access only. Alternatively, the LTSCP can be collocated in a TSP, e.g. eNodeB or it can also be an additional network function.

All above functional elements of the LTS basic reference architecture can be implemented as logical functions. For example, O-MAP and T-MAP can be co-located in one PGW if the PGW is selected for both UE-A and UE-B, or O-TSP and T-TSP can be co-located in the same eNodeB/SGW/ePDG.

Furthermore, the architecture for LTS can include a PCC which provides the QoS and Charging policy for the traffic flows and may also provide the LTS policy (e.g. whether LTS is allowed or not).

First in a UE-A setup of a PDN connection to the network a default bearer or tunnel is created for the internet traffic. PCC sends the default TFT with the charging and QoS rules to TSP and MAP served UE-A. For example a TFT (src IP, src port, dst IP, dst port, proto) can be:
Traffic flow 1: source IP: (10.11.1.9. *, *, *, *);
Traffic flow 2: destination IP: (*, *, 10.11.1.9, *, *), where * is indicating any value.

UE-B performs also a setup of the PDN connection to the network and a default bearer is created for the internet traffic. PCC can send the default TFT with the charging and QoS rules to TSP and MAP served UE-B. For example the TFT can be:
Traffic flow 1: source IP: 10.11.2.31;
Traffic flow 2: destination IP: 10.11.2.31.

In LTS, besides the charging and QoS policy, the LTS policy can also be sent to the TSP and MAP on both UE-A and UE-B sides. The LTS policy can indicate whether the traffic in the default bearer is LTS allowed or not. The LTS policy can be built in PCC, based on the subscription profile, or charging policy (e.g. for offline charging only) or any other information. The LTS policy can also be built in TSP, MAP (e.g. PDN GW) based on the pre-configuration information (e.g. LI policy).

Upon receiving the PCC policy from the PCC, a bearer binding can be performed on both UE-A and UE-B sides, and a bearer setup request can be sent to the access. Currently in EPS, traffic with the same PCC rules (charging and QoS) can be bound to the same bearer.

In LTS, the bearer is bound to TFTs with the same LTS policy, i.e. LTS is allowed or not.

After bearer binding, if there is no existing bearer that can be used, further bearers can be established. The bearers between UE and TSP, and the bearer between TSP and MAP can be established in both UE-A and UE-B sides.

In LTS, it is checked whether LTS is allowed or not based on the LTS policy received. If LTS is allowed, the IP address of the end device UE can be stored together with identity information of the entity serving the end device UE. Otherwise, if LTS is not allowed, the IP address of the end device UE is not stored.

For example, if the bearer is LTS allowed, the TSPs can report its LTS policy to the LTSCP, which can maintain the database which includes the UE IP address and TSP list, e.g., for UE-A and UE-B, LTSCP can maintain the following information:

| **UE IP address** | **TSP** |
|---|---|
| 10.11.1.9 | TSP-A List |
| 10.11.2.31 | TSP-B List |

The LTSCP can also maintain additional information (e.g. IP port, protocol type) for performing a LTS decision. The additional information is reported by TSP based on the LTS policy received, e.g. LTSCP can maintain the following information:

| **UE IP address** | **Destination IP port** | **Protocol type** | **TSP** |
|---|---|---|---|
| 10.11.1.9 | All | All | TSP-A List |
| 10.11.2.31 | 2000∼4000 | All | TSP-B List |
| 10.11.3.201 | 5000∼6000 | TCP | TSP-C List |
| 10.11.4.88 | 21 | UDP | TSP-D List |

The database maintained in LTSCP can be updated in a possible implementation upon:
UE registration or de-registration, or
UE IP address updating, or
LTS policy updating, or
TSP updating when terminal moves.

Upon receiving an IP data packet from UE-A, in the current network, the data traffic can be routed to MAP-A by TSP-A. In this example, the data traffic between UE-A and UE-B can be internet traffic, e.g. a P2P download, FTP file exchange or a social network service.

It can be checked whether LTS is allowed in the bearer, and if the data traffic received is local traffic or not based on the source and destination IP address in the IP packet. If so, a local bearer (LTS path) for the special traffic can be setup between TSP-A and T-TSP-B. Before the setup of the LTS path, the IP data packet received from TSP-A can also be routed to the MAP-A to avoid a transmission delay caused by the local traffic decision.

Following are additional steps performed to establish a LTS path as shown in Figure 3:
TSP-A sends a LTS decision request in step 4a to LTSCP with source IP address and destination IP address of the IP packet.

The LTSCP can perform the LTS decision as follows:
i) LTSCP retrieves a list of O-TSPs based the LTS decision requests received from TSP-A.
ii) LTSCP retrieves a list of T-TSPs by searching the destination IP address of the traffic in the database.
iii) Based on the network topology information in the area, the possible O-TSP and T-TSP for the traffic can be selected.

The LTSCP sends in step 4b a LTS response to TSP-A. The LTS response can include the following options:
i) Non LTS, the LTS is not performed for the traffic, or is performed by another TSP.
ii) LTS indication, LTS can be performed for the data traffic. It may include the following additional information:
   T-TSP ID: the TSP which receives the IP packet;
   TFTs: the traffics can be LTS to the T-TSP.
   QoS policy: if the QoS in UE-A and UE-B is different as the QoS policies are applied for different bearers, the minimum one can be selected by the LTSCP. If MBR is used for the bearer for UE-A and UE-B, it is possible that the MBR in MAP-A and MAP-B are reduced.

Upon receiving the LTS indication from the LTSCP, the O-TSP can respond to initialize the local bearer with the target TSP, based on the request parameters from LTSCP. The local bearer can be a single direction, or a bi-direction bearer which is bound to the existing bearer between O-TSP and T-TSP. In a 3GPP SAE network architecture, the following LTS paths can be established in step 4c as shown in Figure 3:
a LTS path in eNodeB, or
a LTS path between eNodeBs, or
a LTS path in AGW (SGW, ePDG), or
a LTS path between AGWs.

When the LTS path is established, the local bearer can be used for IP packet forwarding.

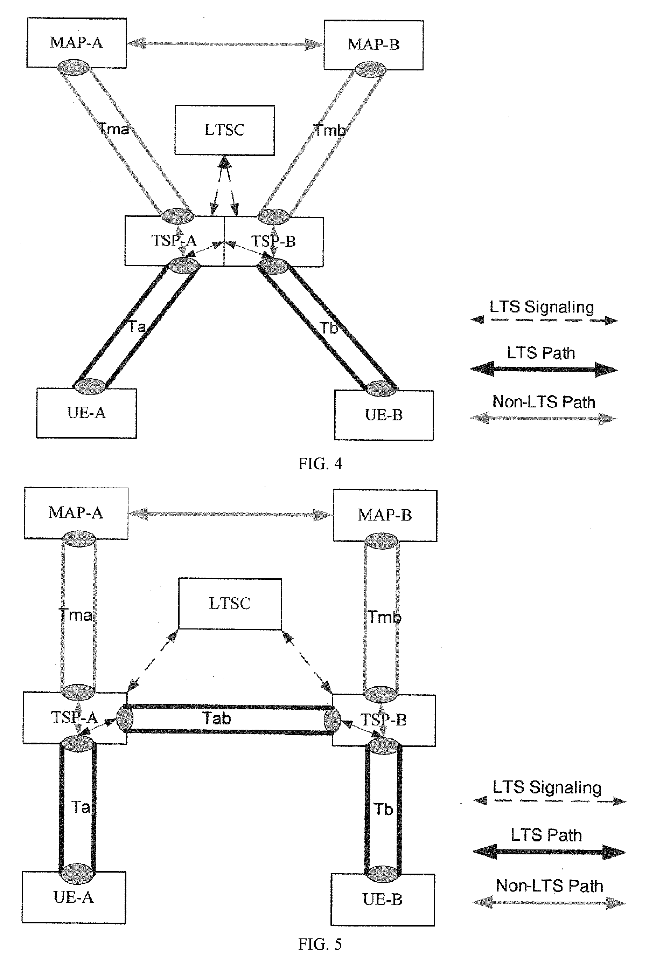

Fig. 4 shows an IP packet forwarding when TSP-A and TSP-B are located in the same network element.

After LTS path establishment, the TSP can maintain the mapping data between the UE tunnel and LTS path, e.g. for the LTS in the same TSP, the TSP-A(B) can maintain the following table:

| **UE Tunnel** | **MA Tunnel** | **Dest IP** | **LTS status** | **LTS Path** |
|---|---|---|---|---|
| Ta | Tma | 10.11.2.31 | Active | Tb |
| Ta | Tma | 10.11.9.8 | Inactive | Null |
| Ta | Tma | 0.0.0.0 | Unknown | Unknown |
| Tb | Tmb | 10.11.1.9 | Active | Ta |
| Tb | Tmb | 10.11.9.8 | Inactive | Null |
| Tb | Tmb | 0.0.0.0 | Unknown | Null |

Fig. 5 shows an IP packet forwarding when TSP-A and TSP-B are located in different network elements.

After LTS path establishment, TSP-A can maintain the following table:

| **UE Tunnel** | **MA Tunnel** | **Dest IP** | **LTS status** | **LTS Path** |
|---|---|---|---|---|
| Ta | Tma | 10.11.2.31 | Active | Tab |
| Ta | Tma | 10.11.9.8 | Inactive | Null |
| Ta | Tma | 0.0.0.0 | Unknown | Null |

While TSP-B can maintain the following table:

| **UE Tunnel** | **MA Tunnel** | **Dest IP** | **LTS status** | **LTS Path** |
|---|---|---|---|---|
| Tb | Tmb | 10.11.1.9 | Active | Tab |
| Tb | Tmb | 10.11.9.8 | Inactive | Null |
| Tb | Tmb | 0.0.0.0 | Unknown | Null |

Upon receiving an uplink IP data packet from the UE tunnel, the TSP can check the LTS status of the UE tunnel. There are for example three status types: active, inactive, unknown. If it is active, the TSP can forward the IP packet to the LTS path, and reset the expired timer of the destination IP. If it is inactive, the TSP can forward it to the MA tunnel, and reset the expired timer of the destination IP. If status is unknown, the TSP can perform a LTS decision. The TSP can create a record on the destination IP address to the table, which indicates LTS status as inactive. The record can be updated after the LTS decision.

Upon receiving a downlink IP data packet from the LTS path, the TSP can check the table and find the UE tunnel and forward it to the UE tunnel.

The O-TSP can be responsible for monitoring of the usage of the LTS path. If there is no IP data packet to a destination IP is received within a predetermined flow, a timer of the LTS path for the destination IP expires.

The LTS path can be updated when a terminal or UE moves, which includes:
the LTS path is established after handover, or
the LTS path terminates after handover, or
the LTS path remains unchanged after handover; e.g. eNodeB handover in the same SGW, the LTS path is performed in SGW, or
the LTS path is changed after handover.

The LTS paths can be for special traffic flows. In case that a handover happens to a UE, some of the traffic flows in the UE can be established after handover, and other traffic flows in the UE can be terminated after handover.

In an example or procedure for a handover in case of LTS, there are two TSPs in UE-A side, TSP-A1 and TSP-A2. The handover is performed e.g. from source TSP-A1 to target TSP-A1.

During handover of UE-A, this includes the following six data traffic flows:

| **Traffic Flow** | **Before handover** | **After handover** | **Impact of LTS path** |
|---|---|---|---|
| Traffic 1 | Non LTS | LTS via target TSP-A1 | LTS path established |
| Traffic 2 | LTS via source TSP-A1 | NonLTS | LTS path terminated |
| Traffic 3 | LTS via source TSP-A1 | LTS via target TSP-A1 | LTS path changed |
| Traffic 4 | LTS via source TSP-A1 | LTS via TSP-A2 | LTS path changed |
| Traffic 5 | LTS via TSP-A2 | LTS via target TSP-A1 | LTS path changed |
| Traffic 6 | LTS via TSP-A2 | LTS via TSP-A2 | LTS path unchanged |

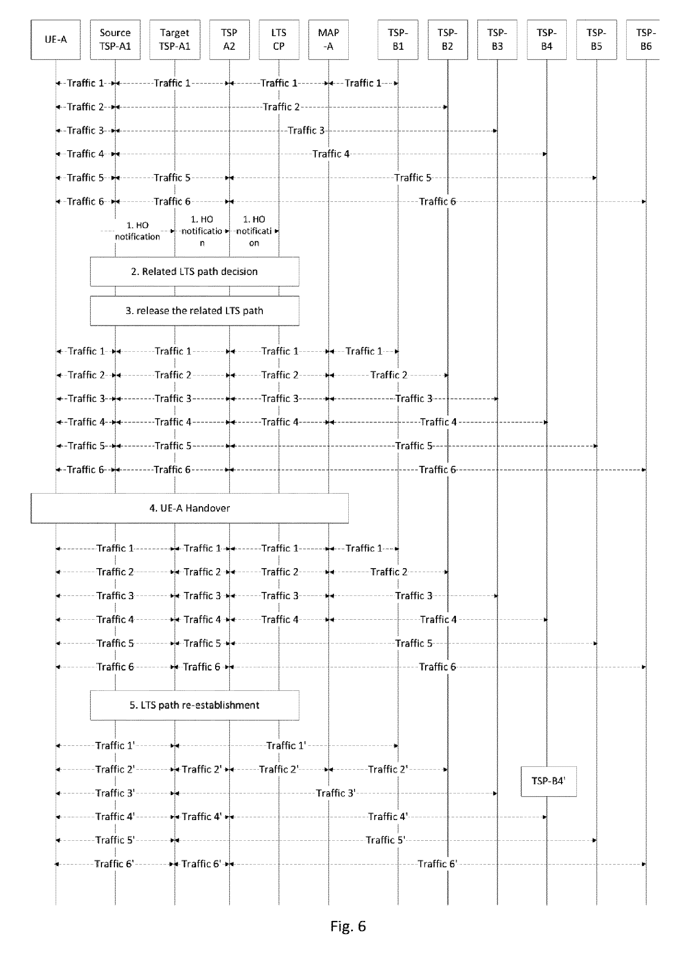

Fig. 6 shows an example handover procedure. In this example, a remote TSP is not used as an anchor point during handover, but the related LTS paths are released during handover, and the LTS paths are re-established after handover.

The procedure includes the following steps:

### Step 1: Handover notification

The handover notification is sent to TSP and LTSCP for LTS handover decision; it includes the information of source TSP-A1 and target TSP-A2.

### Step 2: Related LTS path decision

The LTSCP interacts with the TSPs to find the related LTS path for the handover. The related LTS path can be decided.

If the TSP in the LTS path is changed during handover, the LTS path is the related LTS path for the handover.

As the source TSP has the LTS path information, the related LTS path decision can be performed in the source TSP.

### Step 3: Related LTS path release

To ensure a traffic continuity during handover, the related LTS path is not used during handover. The traffic in the related LTS path can be shifted to MAP-A via TSP-A2.

The source TSP can release the related LTS path, and forward the IP packet received to MAP-A via TSP-A2.

The IP packet forwarding path updating from LTS path to TSP-A2, can be performed after receiving the LTS path release confirmation, or in parallel with the related LTS path release procedure.

In case that the LTS path release confirmation is received, the LTS path is released and the non-LTS path on UE-B side is ready, and the QoS can be ensured during handover. In parallel with the related LTS path release procedure, this can reduce the delay of handover procedure.

In this example, if the LTS path for traffic flow 2, 3, 4 are released, the traffic flow 2, 3, 4 will can be routed to the MAP-A via TSP-A2.

### Step 4: UE-A handover

A handover from TSP-A1 to TSP-A2 can be performed. A common handover procedure according to 3GPP specification can be used.

After handover, all the traffic to source TSP-A1 can be shifted to target TSP-A1.

The mapping of the IP address of the end device and the network entities serving the end device can be updated in the LTSCP. E.g. before UE-A handover, LTSCP maintains the following mapping:

| UE IP address | TSP |
|---|---|
| UE-A (10.11.1.9) | Source TSP-A1, TSP-A2 |

After UE-A handover, LTSCP can maintain the following mapping:

| UE IP address | TSP |
|---|---|
| UE-A (10.11.1.9) | Target TSP-A1, TSP-A2 |

### Step 5: LTS path re-establishment

After handover, a LTS decision can be performed between the LTSCSP and target TSP-A1, TSP-A2 based on the updated information in LTSCP. The LTS decision can be performed with a similar procedure as described above.

After LTS decision, the LTS path can be re-established. The LTS path re-establishment can use a similar procedure as the LTS path establishment described above.

In this example, the following LTS paths can be re-established:
Traffic 1: the LTS path can be established via target TSP-A1.
Traffic 3: the LTS path can be established via target TSP-A1.
Traffic 4: the LTS path can be established via TSP-A2.
Traffic 5: the LTS path can be changed from TSP-A2 to target TSP-A1.

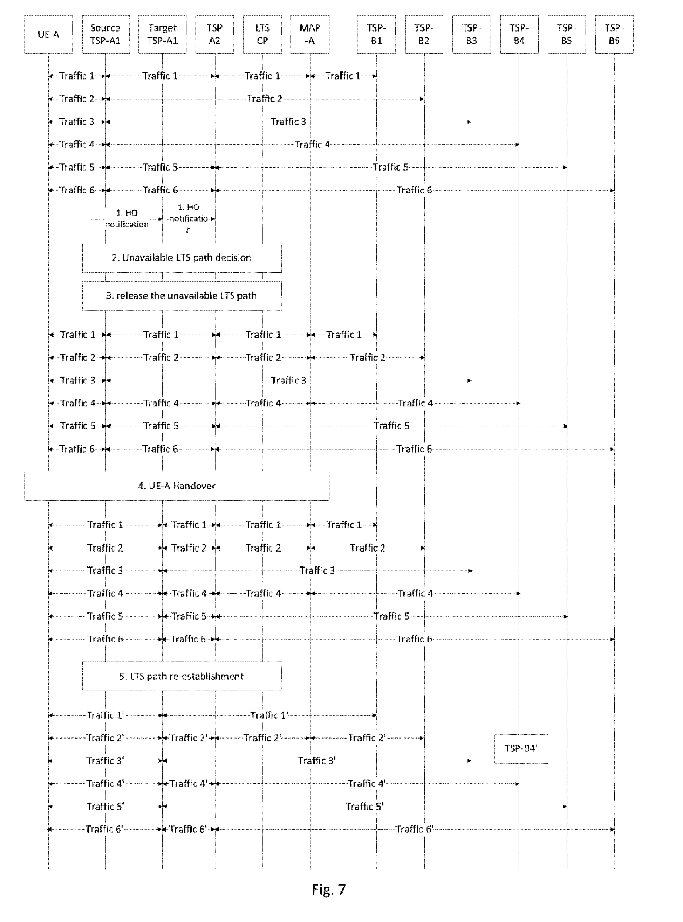

Fig. 7 shows another example for a handover procedure. In this example, the remote TSP is used as an anchor point during handover, only the unavailable LTS paths are released, the other related LTS paths are kept during handover, and the LTS paths are re-established after handover.

Fig. 7 shows the following steps:
Step 1: A handover notification being the same as in the example of Fig. 6
Step 2: Unavailable LTS path decision

The LTSCP interacts with the TSPs to find the related LTS path which is not available after handover based on the network topology of source TSP and target TSP.

In this example, traffic flow 2, 3, 4 are related LTS path, however, traffic 3 is still available after handover, traffic 2, 4 are the unavailable LTS paths.

### Step 3: Unavailable LTS path release

The traffic in the unavailable LTS path can be shifted to MAP-A via TSP-A2.

Source TSP can release the related LTS path, and can forward the IP packet received to MAP-A via TSP-A2.

In this example, the LTS path for traffic flow 2, 4 are released and the traffic flow 2, 4 can be routed to the MAP-A via TSP-A2.

### Step 4: UE-A handover

A handover from TSP-A1 to TSP-A2 can be performed. The common handover procedure in current 3GPP specification can be used.

After handover, all the traffic to source TSP-A1 are shifted to target TSP-A1.

### Step 5: LTS path re-establishment

After handover, a LTS decision is performed between the LTCSP and target TSP-A1, TSP-A2. The LTS decision can use the similar procedure as described above.

After LTS decision, the LTS path can be re-established. The LTS path re-establishment can use the similar procedure as the LTS path establishment described above.

In this example, the following LTS paths are re-established:
Traffic 1: the LTS path is established via target TSP-A1.
Traffic 4: the LTS path is established via TSP-A2.
Traffic 5: the LTS path is changed from TSP-A2 to target TSP-A1.

Compared to the current EPS architecture, the method according to the first aspect of the present invention offers the following enhanced functions.
1) **PCC:** PCC can perform the following enhanced functions:
   - Sending the LTS policy to the MAP. In case of PMIP S5/S8 interface is used, the LTS policy is sent to TSP directly.

   The LTS enhanced PCC function is optional. If there is no LTS policy sent from PCC, the static policy preconfigured in MAP and TSP can be used.
2) **MAP:** MAP can perform the following enhanced functions:
   - Sending the LTS policy to the TSP. In case of PMIP S5/S8 interface is used, the LTS policy is sent to TSP directly.
   - Bearer binding based on the LTS policy if the bearer binding function is located in MAP.
   - MA tunnel modification upon the request from TSP.
3) **TSP:** TSP can perform the following enhanced functions:
   - Bearer binding based on the LTS policy if the bearer binding function is located in TSP.
   - Sending the LTS policy between the TSPs.
   - Sending the traffic flow identifier to the LTSCP for the local traffic decision.
   - Interaction between TSPs for TSP selection in case of a distributed controller.
   - Interaction with LTSCP for TSP selection in case of a centralized controller.
   - LTS path establishment/modification/release between TSP-A and TSP-B.
   - MA tunnel modification during LTS path establishment.
   - Uplink and downlink IP packet forwarding.
   - Related LTS path checking in case of handover.
4) **LTSCP:** LTSCP is an additional functionality provided by the present invention and can perform the following functions:
   - A local traffic decision based on the traffic flow identifier received from TSP and
   - A TSP selection in case of a centralized controller.

**L1 reference point:** The following information is transferred in the L1 reference point from PCC to MAP:
1) Traffic flow identifier, a unique identifier which correlates the traffic flows sent to both UE-A and UE-B sides, e.g. unique session ID in IMS, TFT.
2) LTS policy: LTS allowed or not.

**L2 reference point:** The following information is transferred in the L2 reference point between MAP and TSP:
1) LTS policy from MAP to TSP
   - Traffic flow identifier, a unique identifier which correlates the traffic flows sent to both UE-A and UE-B sides, e.g. unique session ID in IMS, TFT.
   - LTS policy: LTS allowed or not.
1) MA tunnel modification from TSP to MAP
   - QoS parameters

**L3 reference point:** the following information is transferred in the L3 reference point between TSP to LTSCP:
1) Traffic flow identifier from TSP to LTSCP
2) Local traffic indication from LTSCP to TSP
3) TSP selection from LTSCP to TSP in case of centralized controller.

**L4 reference point:** The following information is transferred in the L4 reference point between TSPs which serve the same UE (between up-TSP and down-TSP):
1) LTS policy from up-TSP to down-TSP
   - Traffic flow identifier, a unique identifier which correlates the traffic flows sent to both UE-A and UE-B sides, e.g. unique session ID in IMS, TFT.
   - LTS policy: LTS allowed or not:
2) MA tunnel modification from down-TSP to u-TSP
   - QoS parameters
3) TSP selection notification from down-TSP to up-TSP in case of a distributed controller.

**L5 reference point:** The following information is transferred in the L5 reference point between TSPs serve the different UEs:
1) LTS path establishment/modification/release.

**List of abbreviations**

| | |
|---|---|
| Abbreviation | Full spelling |
| AGW | Access Gateway |
| AS | Application Server |
| DSMIP | Dual Stack Mobile IP |
| EPC | Evolved Packet Core |
| ePDG | enhanced Packet Data Gateway |
| EPS | Enhanced Packet System |
| FA CoA | Foreign Agent Care Of Address |
| GW | Gateway |
| HA | Home Agent |
| HSS | Home Subscriber Server |
| IP | Internet Protocol |
| LMA | Local Mobility Anchor |
| LTE | Long Term Evolution |
| LTS | Local Traffic Shortcut |
| LTSCP | Local Traffic Shortcut Control Point |
| MA | Mobility Anchor |
| MAG | Mobile Access Gateway |
| MAP | Mobile Anchor Point |
| MIP | Mobile IP |
| MME | Mobile Management Entity |
| O-TSP | Originating Traffic Shortcut Point |
| PCC | Policy and Charging Control |
| PCRF | Policy and Charing Rule Function |
| PDN | Packet Data Network |
| PGW | PDN Gateway |
| PMIP | Proxy Mobile IP |
| SAE | System Architecture Evolution |
| SGW | Serving Gateway |
| TFT | Traffic Flow Template |
| TSP | Traffic Shortcut Point |
| T-TSP | Terminating Traffic Shortcut Point |
| UE | User Equipment |

## Claims

1. A method for providing a local traffic shortcut, LTS, in a packet oriented mobile communication network comprising the steps of :
a) storing in a local traffic shortcut control point, LTSCP, the IP addresses of devices served by at least one network node of said network along with a node-ID of the respective network node (S1);
b) receiving an IP data packet by a network node from a served device and extracting a destination IP-address from the received data packet (S2);
c) querying the LTSCP by said network node with the extracted destination IP- address of the received data packet to identify the existence and identity of a network node for performing a local traffic shortcut, LTS (S3);
d) establishing a LTS path with the identified network node (S4); and
e) routing IP data packets having said destination IP-address through the established LTS path,
**characterized in that**
a LTS permission indicating whether an establishment of a LTS path is admissible for the respective served device is provided to the network node when the served device connects to the network node, and stored in the network node, wherein the network node interacts with the LTSCP only if the LTS permission is provided.

2. The method according to claim 1,
wherein the destination IP-address of an IP data flow is extracted from the header of the first IP-data packet of said IP data flow to query said LTS CP for the existence and identity of a network node to establish an LTS path.

3. The method according to claim 1 or 2,
wherein the querying network node receives the identity of the network node for performing a local traffic shortcut LTS only if this complies with configuration data of said local traffic shortcut control point LTSCP.

4. The method according to claims 1 to 3,
wherein the packet-oriented mobile communication network is formed by a hierarchical network having hierarchy levels wherein said LTS path is established between network nodes of the same hierarchy level.

5. The method according to claim 4,
wherein, if a direct connection between a network node and another network node is available the LTS path is established at the lowest possible hierarchy level of said network.

6. The method according to claims 1 to 5,
wherein a LTS database is provided at the local traffic shortcut Control Point (LTS CP) which receives the extracted destination IP-address of the received IP data packet from the network node for performing the query in said LTS database.

7. The method according to claims 1 to 6,
wherein the network node serving the devices is formed by a traffic shortcut point (TSP) comprising
a base station,
a serving gateway or
an enhanced packet data gateway, ePDG, of said network.

8. The method according to claims 1 to 7,
wherein the served device is a user equipment device, UE, which is formed by a mobile device being connected with a base station via a wireless link.

9. The method according to claims 1 to 8,
wherein the established LTS path is stored in a local memory of the serving network node having received the IP data packet from the served device and removed if no IP packets are transferred along the LTS path for a configurable duration.

10. The method according to claim 9,
wherein the established LTS path stored in the local memory of the serving network node is updated when a handover of the served device to another base station is performed.

11. A packet-oriented mobile communication network comprising:
a local traffic shortcut Control Point, LTSCP, performing a query in a LTS database on the basis of an extracted destination IP-address of a data packet received by a first network node from a served device to identify at least one second network node for establishment of an LTS path between the first network node and the identified second network node, wherein the LTS database of the LTSCP stores the IP-addresses of devices served by at least one network node of said network along with a node-ID of the respective serving network node;
means adapted to route IP data packets having said IP-address through the established data path;
**characterized in that**
the packet-oriented mobile communication network further comprises:
means adapted to provide and store in the network node a LTS permission indicating whether an establishment of a LTS path is admissible for the respective served device to the network node when the served device connects to the network node,
wherein the network node is adapted to interact with the LTSCP only if the LTS permission is provided.

12. The packet-oriented mobile communication network according to claim 11, wherein said serving network node is formed by a traffic shortcut point (TSP) comprising: a base station
a serving gateway, SGW, or
an enhanced packet data gateway, ePDG, of said network.

13. The packet-oriented mobile communication network according to claim 11 or 12, when said served device is a user equipment device, UE, being a mobile device connected to a base station via a wireless link.

14. The packet-oriented mobile communication network according to claims 11 to 13, wherein said packet-oriented mobile communication network comprises a 3GPP network or a WIMAX network.

## Patentansprüche

1. Verfahren zum Bereitstellen einer lokalen Verkehrsabkürzung (local traffic shortcut, LTS) in einem paketorientierten Mobilkommunikationsnetzwerk, das die folgenden Schritte aufweist:
a) Speichern in einem lokalen Verkehrsabkürzungssteuerpunkt (local traffic shortcut control point, LTSCP) der IP-Adressen von Geräten, die durch mindestens einen Netzwerkknoten des Netzwerks versorgt werden, zusammen mit einer Knoten-ID des jeweiligen Netzwerkknotens (S1);
b) Empfangen eines IP-Datenpakets durch einen Netzwerkknoten von einem versorgten Gerät und Extrahieren einer Ziel-IP-Adresse aus dem empfangenen Datenpaket (S2);
c) Abfragen des LTSCP durch den Netzwerkknoten mit der extrahierten Ziel-IP-Adresse des empfangenen Datenpakets, um die Existenz und Identität eines Netzwerkknotens zum Durchführen einer lokalen Verkehrsabkürzung, LTS, zu identifizieren (S3);
d) Herstellen eines LTS-Wegs mit dem identifizierten Netzwerkknoten (S4); und
e) Leiten von IP-Datenpaketen, die die Ziel-IP-Adresse aufweisen, durch den hergestellten LTS-Weg,
**dadurch gekennzeichnet, dass**
eine LTS-Berechtigung, die anzeigt, ob eine Herstellung eines LTS-Wegs für das jeweilige versorgte Gerät zulässig ist, an den Netzwerkknoten geliefert wird, wenn sich das versorgte Gerät mit dem Netzwerkknoten verbindet, und im Netzwerkknoten gespeichert wird, wobei der Netzwerkknoten mit dem LTSCP nur zusammenwirkt, wenn die LTS-Berechtigung geliefert wird.

2. Verfahren nach Anspruch 1,
wobei die Ziel-IP-Adresse eines IP-Datenflusses aus dem Dateikopf des ersten IP-Datenpakets des IP-Datenflusses extrahiert wird, um den LTSCP hinsichtlich der Existenz und Identität eines Netzwerkknotens abzufragen, um einen LTS-Weg herzustellen.

3. Verfahren nach Anspruch 1 oder 2,
wobei der abfragende Netzwerkknoten die Identität des Netzwerkknotens zum Durchführen einer lokalen Verkehrsabkürzung LTS nur empfängt, wenn dies Konfigurationsdaten des lokalen Verkehrsabkürzungssteuerpunkts LTSCP entspricht.

4. Verfahren nach einem der Ansprüche 1 bis 3,
wobei das paketorientierte Mobilkommunikationsnetzwerk durch ein hierarchisches Netzwerk gebildet wird, das Hierarchieebenen aufweist, wobei der LTS-Weg zwischen Netzwerkknoten derselben Hierarchieebene hergestellt wird.

5. Verfahren nach Anspruch 4,
wobei dann, wenn eine direkte Verbindung zwischen einem Netzwerkknoten und einem anderen Netzwerkknoten verfügbar ist, der LTS-Weg auf der niedrigsten möglichen Hierarchieebene des Netzwerks hergestellt wird.

6. Verfahren nach einem der Ansprüche 1 bis 5,
wobei eine LTS-Datenbank am lokalen Verkehrsabkürzungssteuerpunkt (LTSCP) vorgesehen ist, die die extrahierte Ziel-IP-Adresse des empfangenen IP-Datenpakets vom Netzwerkknoten zum Durchführen der Abfrage in der LTS-Datenbank empfängt.

7. Verfahren nach einem der Ansprüche 1 bis 6,
wobei der Netzwerkknoten, der die Geräte versorgt, durch einen Verkehrsabkürzungspunkt (traffic shortcut point, TSP) gebildet wird, der aufweist:
eine Basisstation,
ein Versorgungsgateway oder
ein "Enhanced Packet Data Gateway", ePDG, des Netzwerks.

8. Verfahren nach einem der Ansprüche 1 bis 7,
wobei das versorgte Gerät ein Benutzereinrichtungsgerät (user equipment device, UE) ist, das durch ein mobiles Gerät gebildet wird, das mit einer Basisstation über eine drahtlose Verbindung verbunden ist.

9. Verfahren nach einem der Ansprüche 1 bis 8,
wobei der hergestellte LTS-Weg in einem lokalen Speicher des Versorgungsnetzwerkknotens gespeichert wird, der das IP Datenpaket vom versorgten Gerät empfangen hat, und entfernt wird, wenn für eine konfigurierbare Dauer keine IP-Pakete längs des LTS-Wegs übertragen werden.

10. Verfahren nach Anspruch 9,
wobei der hergestellte LTS-Weg, der im lokalen Speicher des Versorgungsnetzwerkknotens gespeichert ist, aktualisiert wird, wenn eine Übergabe des versorgten Geräts zu einer anderen Basisstation durchgeführt wird.

11. Paketorientiertes Mobilkommunikationsnetzwerk, das Folgendes aufweist:
einen lokalen Verkehrsabkürzungssteuerpunkt, LTSCP, der eine Abfrage in einer LTS-Datenbank auf der Grundlage einer extrahierten Ziel-IP-Adresse eines Datenpakets durchführt, das durch einen ersten Netzwerkknoten von einem versorgten Gerät empfangen wird, um mindestens einen zweiten Netzwerkknoten zu identifizieren, zur Herstellung eines LTS-Wegs zwischen dem ersten Netzwerkknoten und dem identifizierten zweiten Netzwerkknoten, wobei die LTS-Datenbank des LTSCP die IP-Adressen von Geräten, die durch mindestens einen Netzwerkknoten des Netzwerks versorgt werden, zusammen mit einer Knoten-ID des jeweiligen Versorgungsnetzwerkknotens speichert;
Mittel, die eingerichtet sind, IP-Datenpakete, die die IP-Adresse aufweisen, durch den hergestellten Datenweg zu leiten;
**dadurch gekennzeichnet, dass**
das paketorientierte Mobilkommunikationsnetzwerk ferner aufweist:
Mittel, die eingerichtet sind, an den Netzwerkknoten eine LTS-Berechtigung zu liefern und in ihm zu speichern, die anzeigt, ob eine Herstellung eines LTS-Wegs für das jeweilige versorgte Gerät zum Netzwerkknoten zulässig ist, wenn sich das versorgte Gerät mit dem Netzwerkknoten verbindet,
wobei der Netzwerkknoten eingerichtet ist, mit dem LTSCP nur zusammenzuwirken, wenn die LTS-Berechtigung geleifert wird.

12. Paketorientiertes Mobilkommunikationsnetzwerk nach Anspruch 11, wobei der Versorgungsnetzwerkknoten durch einen Verkehrsabkürzungspunkt (TSP) gebildet wird, der aufweist
eine Basisstation,
ein Versorgungsgateway (serving gateway, SGW) oder
ein "Enhanced Packet Data Gateway", ePDG, des Netzwerks.

13. Paketorientiertes Mobilkommunikationsnetzwerk nach Anspruch 11 oder 12, wobei das versorgte Gerät ein Benutzereinrichtungsgerät, UE, ist, das ein mobiles Gerät ist, das mit einer Basisstation über eine drahtlose Verbindung verbunden ist.

14. Paketorientiertes Mobilkommunikationsnetzwerk nach einem der Ansprüche 11 bis 13, wobei das paketorientierte Mobilkommunikationsnetzwerk ein 3GPP-Netzwerk oder ein WIMAX-Netzwerk umfasst.

## Revendications

1. Procédé de fourniture d'un raccourci de trafic local, LTS (Local Traffic Shortcut), dans un réseau de communication mobile orienté paquets, comprenant les étapes suivantes :
a) le stockage, dans un point de commande de raccourci de trafic local, LTSCP (Local Traffic Shortcut Control Point), des adresses IP de dispositifs desservis par au moins un noeud de réseau dudit réseau en association avec un ID de noeud du noeud de réseau respectif (S1) ;
b) la réception d'un paquet de données IP par un noeud de réseau en provenance d'un dispositif desservi et l'extraction d'une adresse IP de destination à partir du paquet de données reçu (S2) ;
c) l'interrogation du LTSCP par ledit noeud de réseau ayant l'adresse IP de destination extraite du paquet de données reçu afin d'identifier l'existence et l'identité d'un noeud de réseau pour effectuer un raccourci de trafic local, LTS (S3) ;
d) l'établissement d'un trajet LTS avec le noeud de réseau identifié (S4) ; et
e) le routage de paquets de données IP ayant ladite adresse IP de destination par l'intermédiaire du trajet LTS établi, **caractérisé en ce que**
une permission LTS indiquant si un établissement d'un trajet LTS est admissible pour le dispositif desservi respectif est délivrée au noeud de réseau lorsque le dispositif desservi se connecte au noeud de réseau, et est stockée dans le noeud de réseau, le noeud de réseau n'interagissant avec le LTSCP que si la permission LTS est délivrée.

2. Procédé selon la revendication 1,
dans lequel l'adresse IP de destination d'un flux de données IP est extraite de l'en-tête du premier paquet de données IP dudit flux de données IP pour interroger ledit LTSCP en ce qui concerne l'existence et l'identité d'un noeud de réseau afin d'établir un trajet LTS.

3. Procédé selon la revendication 1 ou 2,
dans lequel le noeud de réseau demandeur reçoit l'identité du noeud de réseau afin de n'effectuer un raccourci de trafic local LTS que si celui-ci respecte des données de configuration dudit point de commande de raccourci de trafic local LTSCP.

4. Procédé selon l'une quelconque des revendications 1 à 3,
dans lequel le réseau de communication mobile orienté paquets est formé par un réseau hiérarchique ayant des niveaux hiérarchiques, dans lequel ledit trajet LTS est établi entre des noeuds de réseau du même niveau hiérarchique.

5. Procédé selon la revendication 4,
dans lequel, si une connexion directe entre un noeud de réseau et un autre noeud de réseau est disponible, le trajet LTS est établi au niveau hiérarchique le plus bas possible dudit réseau.

6. Procédé selon l'une quelconque des revendications 1 à 5,
dans lequel une base de données LTS est fournie au niveau du point de commande de raccourci de trafic local (LTSCP) qui reçoit l'adresse IP de destination extraite du paquet de données IP reçu en provenance du noeud de réseau afin d'effectuer la demande dans ladite base de données LTS.

7. Procédé selon l'une quelconque des revendications 1 à 6,
dans lequel le noeud de réseau desservant les dispositifs est formé par un point de raccourci de trafic (TSP, Traffic Shortcut Point) comprenant :
une station de base,
une passerelle de desserte ou
une passerelle de données par paquets améliorée, ePDG (enhanced Packet Data Gateway), dudit réseau.

8. Procédé selon l'une quelconque des revendications 1 à 7,
dans lequel le dispositif desservi est un dispositif d'équipement utilisateur, UE (User Equipment), qui est constitué par un dispositif mobile connecté à une station de base via une liaison sans fil.

9. Procédé selon l'une quelconque des revendications 1 à 8,
dans lequel le trajet LTS établi est stocké dans une mémoire locale du noeud de réseau de desserte ayant reçu le paquet de données IP en provenance du dispositif desservi et est supprimé si aucun paquet IP n'est transféré le long du trajet LTS pendant une durée configurable.

10. Procédé selon la revendication 9,
dans lequel le trajet LTS établi stocké dans la mémoire locale du noeud de réseau de desserte est mis à jour lorsqu'un transfert du dispositif desservi vers une autre station de base est effectué.

11. Réseau de communication mobile orienté paquets comprenant :
un point de commande de raccourci de trafic local, LTSCP, effectuant une demande dans une base de données LTS sur la base d'une adresse IP de destination extraite d'un paquet de données reçu par un premier noeud de réseau en provenance d'un dispositif desservi afin d'identifier au moins un second noeud de réseau destiné à l'établissement d'un trajet LTS entre le premier noeud de réseau et le second noeud de réseau identifié, dans lequel la base de données LTS du LTSCP stocke les adresses IP de dispositifs desservis par au moins un noeud de réseau dudit réseau en association avec un ID de noeud du noeud de réseau de desserte respectif ;
des moyens aptes à router des paquets de données IP ayant ladite adresse IP par l'intermédiaire du trajet de données établi ;
**caractérisé en ce que**
le réseau de communication mobile orienté paquets comprend en outre :
des moyens aptes à délivrer et stocker dans le noeud de réseau une permission LTS indiquant si un établissement d'un trajet LTS est admissible pour le dispositif desservi respectif au noeud de réseau lorsque le dispositif desservi se connecte au noeud de réseau, dans lequel le noeud de réseau est apte à n'interagir avec le LTSCP que si la permission LTS est délivrée.

12. Réseau de communication mobile orienté paquets selon la revendication 11,
dans lequel le noeud de réseau de desserte est formé par un point de raccourci de trafic (TSP) comprenant :
une station de base,
une passerelle de desserte, SGW (Serving Gateway), ou
une passerelle de données par paquets améliorée, ePDG, dudit réseau.

13. Réseau de communication mobile orienté paquets selon la revendication 11 ou 12, lorsque ledit dispositif desservi est un dispositif d'équipement utilisateur, UE, qui est un dispositif mobile connecté à une station de base via une liaison sans fil.

14. Réseau de communication mobile orienté paquets selon l'une quelconque des revendications 11 à 13, dans lequel ledit réseau de communication mobile orienté paquets comprend un réseau 3GPP ou un réseau WIMAX.
